# EUROPÄISCHE PATENTANMELDUNG

(11) **EP 1 674 954 A1**
(43) Veröffentlichungstag der Anmeldung: **28.06.2006**
(21) Anmeldenummer: 04030320.8
(22) Anmeldetag: 21.12.2004
(51) Int. Cl.: G05B 19/042

(54) **System und Verfahren zur Wiederverwendung von Projektierungsdaten**

(71) Anmelder: SIEMENS AKTIENGESELLSCHAFT, 80333 München (DE)
(72) Erfinder: Gikas, Diamantis, 90473 Nürnberg (DE); Lange, Ronald, 90766 Fürth (DE); Leins, Ralf, 75228 Ispringen (DE); Meusser, Klaus, 90768 Fürth (DE); Schmoll, Jürgen, 91801 Markt Berolzheim (DE)

(57) **Zusammenfassung**

Die Erfindung betrifft ein System sowie ein Verfahren zum Verwalten und/oder Bereitstellen von Elementen, insbesondere von technologischen Objekten. Das System ermöglicht die Wiederverwendung von Elementen, insbesondere technologischen Objekten, bei der Erstellung einer Projektierungslösung. Hierbei wird mindestens ein Element (2₁..2ₙ) insbesondere durch einen Benutzer des Systems kreiert, wobei das mindestens eine Element (2₁..2ₙ) als Vorlage zur Erstellung von einem Exemplar als Abbild oder mehreren Exemplaren (2I₁..2Iₙ) als Abbilder des Elements (2₁..2ₙ) dient. Die kreierten Elemente (2₁..2ₙ) werden in einer Bibliothek (3) gespeichert und ein Exemplar (2I₁..2Iₙ) eines gespeicherten Elements (2₁..2ₙ) wird erstellt, wobei das Exemplar (2I₁..2Iₙ) für die Erstellung einer Lösung (4), insbesondere einer Automatisierungslösung, verwendet wird.

## Beschreibung

Die Erfindung betrifft ein System sowie ein Verfahren zum Verwalten und/oder Bereitstellen von Elementen, insbesondere von technologischen Objekten.

Bei der Erstellung von Engineering-Lösungen, insbesondere im Umfeld von Automatisierungssystemen, wird in der Regel nicht alles komplett neu entwickelt. Vielmehr wird typischerweise eine Lösung auf Basis bereits existierender Teillösungen oder Bausteine entwickelt. Hierbei können Teile der bereits existierenden Lösungen in unveränderter Form übernommen werden, es kommt jedoch auch häufiger vor, dass die bereits existierenden Teillösungen lediglich als Ausgangspunkt für die weiteren Entwicklungen dienen. In diesem Fall werden die existierenden Teillösungen im Rahmen der Weiterentwicklung modifiziert.

Im Rahmen von Entwicklungsprojekten ist ein wichtiger Aspekt, in welchem Umfang bereits existierende Lösungen wieder verwendet werden können. Ein hoher Anteil wieder verwendbarer Elemente reduziert die Entwicklungskosten und ist somit vorteilhaft für Hersteller und Kunden.

Bereits vorgefertigte Bausteine können für die Wiederverwendung beispielsweise in Form von Bibliotheken abgelegt werden. Hierbei ist jedoch ein branchenübergreifendes Konzept, welches auch verschiedene Domänen des Automatisierungsumfeldes umfasst, derzeit nicht bekannt. Beispielsweise weisen Entwicklungsumgebungen für MES-Projekte andere Bibliotheken auf, als solche im Controls-Umfeld. Ebenso ist eine Modifikation bei der Verwendung wieder verwendbarer Bausteine heutzutage nicht gegeben.

Aufgabe der vorliegenden Erfindung ist daher, ein System und ein Verfahren anzugeben, welches die Wiederverwendung von Elementen, insbesondere technologischen Objekten, bei der Erstellung einer Projektierungslösung ermöglicht.

Die Aufgabe wird gelöst durch ein System zum Verwalten und/oder Bereitstellen von Elementen, insbesondere von technologischen Objekten, mit ersten Mitteln zum Kreieren mindestens eines Elementes, insbesondere durch einen Benutzer des Systems, wobei das mindestens eine Element als Vorlage zur Erstellung von einem Exemplar als Abbild oder mehreren Exemplaren als Abbilder des Elements vorgesehen ist, mit einer Bibliothek zur Speicherung mindestens der kreierten Elemente und mit zweiten Mitteln zur Erstellung mindestens eines Exemplars eines gespeicherten Elements, wobei das mindestens eine Exemplar zur Verwendung für die Erstellung einer Lösung, insbesondere einer Automatisierungslösung vorgesehen ist.

Die Aufgabe wird weiterhin gelöst durch ein Verfahren zum Verwalten und/oder Bereitstellen von Elementen, insbesondere von technologischen Objekten, bei dem mindestens ein Element, insbesondere durch einen Benutzer des Systems kreiert wird, wobei das mindestens eine Element als Vorlage zur Erstellung von einem Exemplar als Abbild oder mehreren Exemplaren als Abbilder des Elements dient, mindestens die kreierten Elemente in einer Bibliothek gespeichert werden und mindestens ein Exemplar eines gespeicherten Elements erstellt wird, wobei das mindestens eine Exemplar für die Erstellung einer Lösung, insbesondere einer Automatisierungslösung verwendet wird.

Der Erfindung liegt die Erkenntnis zugrunde, dass die Wiederverwendung von bereits existierenden Elementen, technologischen Objekten oder auch Teillösungen im Rahmen der Entwicklung eines Projektes, vor allem im Automatisierungsumfeld von Vorteil ist. Hierbei ist eins der Ziele, die Möglichkeit für die zentrale Aktualisierung entsprechend wieder verwendbarer Elemente oder Bausteine zu schaffen. D.h., dass bei Einfügen oder Aktualisieren eines derartigen Elements oder Bausteins automatisch oder durch einen Benutzer die entsprechenden Exemplare, welche im Rahmen der Generierung neuer Lösungen von dem Element bzw. dem Baustein instanziiert wurden, aktualisiert werden. Hierzu werden in einer Bibliothek grundsätzlich wieder verwendbare Elemente also Funktionsbausteine, welche technologische Objekte, beispielsweise ein Ventil oder eine Pumpe in einer Anlage repräsentieren, gespeichert. Diese Elemente oder auch Typen, können quasi vervielfältigt werden und im Rahmen neuer Lösungen von den Entwicklern dann verwendet werden. Hierbei werden von den Elementen aus der Bibliothek dann Abbilder geschaffen, die als Exemplare für die neu zu fertigenden Lösungen zur Verfügung stehen. Bei der Schaffung eines Exemplars als Abbild eines Elementes handelt es sich um die Instanziierung eines in der Bibliothek hinterlegten Typs.

Derartige Funktionsbausteine oder Elemente können beispielsweise relativ kleine technologische Objekte, z.B. Pumpen, Ventile oder Klemmen betreffen. Bei der Erstellung einer neuen Automatisierungslösung kann ein Projekteur auf diese Elemente, welche in der Bibliothek des Systems gespeichert sind, zurückgreifen. Er kann somit einmal entwickelte Elemente wieder verwenden für weitere Lösungen. Dies führt zu einer Reduktion des Engineering-Aufwandes im Rahmen der Erstellung einer Automatisierungslösung.

Die Elemente, welche grundsätzlich für die Wiederverwendung im Rahmen des Systems bereitstehen, stammen beispielsweise aus einer globalen Bibliothek, in der alle Elemente gespeichert sind die potentiell im Rahmen von Projekten wieder verwendbar sind. Ein Benutzer kann beispielsweise bei Durchführung eines Projekts dann eine projektspezifische Bibliothek aufmachen, und aus der globalen Bibliothek oder auch aus mehreren globalen Bibliotheken Elemente mit Hilfe der Mittel zum Kreieren eines Elementes in diese Bibliothek aufnehmen. Im Rahmen des Projekts stehen die entsprechenden Elemente dann zur Wiederverwendung zur Verfügung. Bei globalen Bibliotheken kann es sich beispielsweise um technologische Bibliotheken, die zu einem Engineering-System gehören, handeln. Diese Bibliotheken können beispielsweise mit dem Engineering-System gemeinsam geliefert werden. Eine globale Bibliothek kann auch eine Bibliothek eines Lösungsherstellers sein, in der der Lösungshersteller von ihm entwickelte Funktionsbausteine oder Elemente speichert. Bei einer globalen Bibliothek kann es sich beispielsweise auch um die Sammlung von Funktionsblöcken oder HMI-Oberflächen handeln, die für spezifische Branchen spezifisch ausgebildet sind, beispielsweise sind die Funktionsblöcke und HMI-Oberflächen im Automotive-Umfeld anders strukturiert als in der Prozessautomatisierung.

Neben den Elementen, die ein Benutzer im Rahmen seiner Projektbibliothek aus den globalen Bibliotheken, u.U. auch aus mehreren verschiedenen globalen Bibliotheken aufnehmen kann, kann der Benutzer Elemente bzw. technologische Objekte auch über andere Quellen beziehen und in seine Projektbibliothek einfügen. Beispielsweise kann er auch Elemente aus anderen Projekten einfügen oder neu kreierte Elemente, die speziell für das aktuelle Projekt zur Verfügung stehen sollen. Hierbei ist eine Projektbibliothek an das entsprechende aktuelle Projekt gebunden und somit sind alle wichtigen Operationen, die in dem Projekt angewandt werden, in der Bibliothek enthalten.

Für ein Projekt existiert in der Regel eine einzige Projektbibliothek. Werden Elemente bzw. technologische Objekte aus verschiedenen globalen Bibliotheken oder anderen Quellen in die Projektbibliothek aufgenommen, so kann vom Anwender oder auch vom System beispielsweise automatisch eine Unterstruktur generiert werden, indem Bibliotheksordner für die Elemente aus den unterschiedlichen Quellen angelegt werden. Dies hilft dem Benutzer bei der Navigation durch die Projektbibliothek. Außerdem werden dadurch Konflikte bei der Namensgebung von unterschiedlichen Bibliothekselementen vermieden.

Eine weitere vorteilhafte Ausbildung der Erfindung ist dadurch gekennzeichnet, dass das mindestens eine Element für Benutzer identifizierbare Eigenschaften und/oder Merkmale aufweist. Hierdurch wird dem Benutzer ermöglicht, ein Element der Bibliothek zu identifizieren, auch wenn es zwischen verschiedenen Projekten kopiert worden ist. Als Merkmale für das Element sind hierbei allgemeine Attribute, wie beispielsweise Name, Autor, Familie, Version möglich. Zusätzlich gibt es ein Attribut namens Type-ID. Dieses Attribut stellt auch bei Änderung des Namens oder der Version sicher, dass determiniert werden kann, ob bestimmte Elemente einer Bibliothek vom selben Typ sind. Mit den Attributen werden weitere Informationen übermittelt, beispielsweise über die Beziehung zwischen unterschiedlichen Bibliothekselementen, beispielsweise ob ein Bibliothekselement eine neue Version eines bereits existierenden ist. Hierdurch behält der Benutzer einen Überblick über die Elemente, welche ihm über die Bibliothek und als Instanzen davon in den Projekten zur Verfügung stehen.

Eine weitere vorteilhafte Ausbildung der Erfindung ist dadurch gekennzeichnet, dass die Bibliothek derart ausgebildet ist, dass ihre Struktur durch einen Benutzer vorgebbar ist. Hierdurch kann der Benutzer im Rahmen seines Engineering-Prozesses auf eine Bibliothek zurückgreifen, deren Struktur für seine Zwecke optimal ausgerichtet ist. Ein Benutzer kann sich für sein Projekt die Bibliothek so strukturieren, dass die für ihn relevanten und zusammengehörigen Elemente in entsprechenden Ordnern gespeichert sind. Die Arbeit im Rahmen des Engineering wird dem Benutzer dadurch erleichtert.

Eine weiter vorteilhafte Ausbildung der Erfindung ist dadurch gekennzeichnet, dass die Bibliothek Ordner und/oder Teilmengen zur Speicherung von bestimmten Elementen, insbesondere von Elementen unterschiedlicher Herkunft, aufweist. Hierdurch kann vom Benutzer auf einfache Weise eine Strukturierung vorgenommen werden, derart, dass die Elemente in Teilmengen oder Ordnern kopiert werden, je nach dem, ob sie aus unterschiedlichen globalen Bibliotheken oder auch von anderer Herkunft sind. Eine vorteilhafte Gruppierung der Elemente wird dadurch möglich. Ebenso ist es möglich, dass ein Element in der Bibliothek weiterhin in "Unterelemente" untergliedert werden kann, die verschiedene Aspekte repräsentieren, beispielsweise für Control, für HMI oder für Diagnose. Hierdurch können quasi "Untertypen" gebildet werden, die in einzelnen Projekten jeweils instanziiert werden, ohne, dass das ganze Element instanziiert werden muss.

Eine weitere vorteilhafte Ausbildung der Erfindung ist dadurch gekennzeichnet, dass eine bidirektionale Verbindung zwischen jeweils dem mindestens einen Element und dem einen oder mehreren Exemplaren vorgesehen ist. Durch den bidirektionalen Link bzw. die Verbindung zwischen einem Bibliothekselement und seinen Instanzen wird die Möglichkeit geschaffen, dass die Instanzen aktualisiert bzw. upgedatet werden, wenn eine neue Version eines Elements der Bibliothek zur Verfügung steht. Umgekehrt ist es durch die bidirektionale Verbindung ebenso möglich, das Element bzw. den Typ zu aktualisieren, wenn das Exemplar bzw. die Instanz des Typs geändert wurde. Hierzu ist es notwendig, dass die Instanz bzw. das Exemplar den Typ bzw. das Element kennt, aus dem es abgeleitet ist.

Eine weitere vorteilhafte Ausbildung der Erfindung ist dadurch gekennzeichnet, dass dritte Mittel zur Aktualisierung der Exemplare eines Elements bei Änderung und/oder Ersatz des Elements vorgesehen sind. Hierdurch können alle Exemplare bzw. Instanzen eines Typs aktualisiert werden, wenn sich der Ursprung, also der Typ in der Projektbibliothek ändert. Die Aktualisierung kann hierbei automatisch bei Änderung oder Ersatz eines Elements bzw. des Typs erfolgen. Die Aktualisierung kann jedoch auch derart erfolgen, dass sie nur durch einen Benutzer ausführbar ist, wenn ein Element aktualisiert wurde. Hierbei wird bei Aktualisierung eines Elements in der Projektbibliothek der Benutzer gefragt, ob er die von dem Element bzw. dem Typ abgeleiteten Exemplare bzw. Instanzen aktualisieren möchte oder nicht. Die Aktualisierung kann hierbei auch lediglich auf einzelne Instanzen bzw. Exemplare ausgeweitet werden. Hierdurch wird dem Benutzer des Systems eine größtmögliche Flexibilität bei der Aktualisierung von wieder verwendbaren Funktionsbausteinen gegeben.

Eine weitere vorteilhafte Ausbildung des Systems ist dadurch gekennzeichnet, dass vierte Mittel zur Aktualisierung von Elementen der Bibliothek bei Änderung eines Exemplars vorgesehen sind. Hierbei kann im Rahmen des Systems umgekehrt bei Änderung einer Instanz auch der der Instanz zugrunde liegende Typ bzw. das Element geändert werden. Hierbei sind im Rahmen des Systems zwei Möglichkeiten vorgesehen. Das Element bzw. der Typ kann bei Änderung einer Instanz in der Projektbibliothek ebenfalls geändert werden und steht dann in modifizierter Form für alle anderen Instanzen zur Verfügung. Bei Änderung einer Instanz kann jedoch ebenfalls im Rahmen des erfindungsgemäßen Systems ein neues Element in der Bibliothek angelegt werden, welches dann als paralleles Element zum ursprünglichen Element existiert. Auf diese Weise kommt es zu einer Veränderung von Elementen, welches mit einer Vermehrung der jeweiligen Elemente einhergeht. Ob ein neues Element angelegt werden soll bzw. ob das ursprüngliche Element geändert werden soll und kein neues Element angelegt wird, ist hierbei der Entscheidung des Benutzers unterworfen. Wird ein neues Element angelegt, so wird von der Instanz bzw. dem Exemplar zum Typ, also dem neuen Element bzw. Funktionsbaustein ebenfalls eine neue bidirektionale Verbindung aufgebaut, so dass die allgemeinen Aktualisierungsmechanismen im Rahmen des erfindungsgemäßen Systems auch wieder anwendbar sind.

Eine weitere vorteilhafte Ausbildung der Erfindung ist dadurch gekennzeichnet, dass fünfte Mittel zur Aktualisierung der Elemente und/oder der Exemplare bei Änderung der Bibliothek vorgesehen sind. Hierdurch wird die Möglichkeit gegeben, viele Typen bzw. Elemente und die aus ihnen instanziierten Exemplare auf einmal bei Aktualisierung der gesamten Bibliothek ebenfalls zu aktualisieren.

Eine weitere vorteilhafte Ausbildung der Erfindung ist dadurch gekennzeichnet, dass das System als Engineering-System für Automatisierungssysteme ausgebildet ist. Insbesondere im Umfeld der Erstellung von Lösungen für Automatisierungssysteme ist ein großer Aufwand für die Erstellung von einzelnen Teillösungen bzw. technologischen Objekten zu verzeichnen. Hierbei bietet es sich besonders an, auf bereits existierende Elemente zurückzugreifen, was zu einer signifikanten Reduktion der Entwicklungskosten führt.

Im Folgenden wird die Erfindung der in den Figuren dargestellten Ausführungsbeispiele näher beschrieben und erläutert.

Es zeigen:
- FIG 1: eine schematische Darstellung des erfindungsgemäßen Systems zum Verwalten oder Bereitstellen von technologischen Objekten,
- FIG 2: eine Aktualisierung eines Elementes in der Bibliothek,
- FIG 3: ein Ersatz eines Elements in der Bibliothek,
- FIG 4: eine Änderung eines Elements über ein Exemplar,
- FIG 5: eine Bibliotheksaktualisierung,
- FIG 6: eine unabhängige Erzeugung von Bibliothekselementen und anschließende Verbindung,
- FIG 7: eine abhängige Erzeugung von Exemplaren aus den Elementen der Bibliothek.

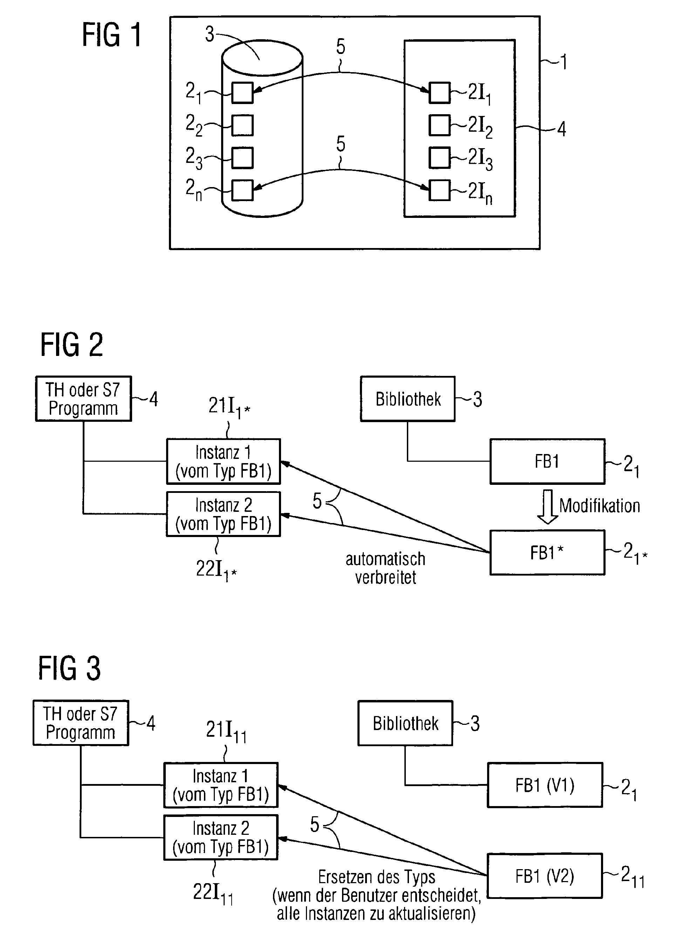

FIG 1 stellt ein System 1 zum Verwalten und Bereitstellen von Elementen 2₁..2ₙ dar. Die Elemente sind in einer Bibliothek 3 gespeichert. Bei den Elementen kann es sich um technologische Objekte, beispielsweise Pumpen, Ventile oder Klemmen handeln. Die Elemente stehen im Rahmen des Systems 1 einem Benutzer zur Verwendung für die Erstellung einer Lösung 4, insbesondere einer Automatisierungslösung, zur Verfügung. Hierzu werden von den Elementen jeweils ein oder mehrere Exemplare 2I₁..2Iₙ als Abbilder erstellt. Bei den Exemplaren handelt es sich um Instanzen der jeweiligen Elemente. Die Exemplare stehen im Rahmen des Systems 1 für die Erstellung einer Automatisierungslösung zur Verfügung. Die erstellten Exemplare bzw. die Instanzen sind bidirektional mit den Ursprungselementen, also den Typen, welche als Basis für die Instanzen dienen, verbunden. Bei der Verbindung handelt es sich um einen Link 5.

Im Rahmen des erfindungsgemäßen Systems 1 werden durch einen Benutzer von verschiedenen Typen bzw. Elementen 2₁..2ₙ, die in der Bibliothek 3 gespeichert sind, ein oder mehrere Abbilder geschaffen. Diese Abbilder liegen als Exemplare 2I₁..2Iₙ in Form einer Instanz des Typen vor. Die Exemplare können dann für die Erstellung einer Automatisierungslösung verwendet werden. Hierbei können die Exemplare durch den Benutzer modifiziert werden, so dass die Lösung spezifisch auf das zugrunde liegende Problem angepasst wird. Die bidirektionale Verbindung in Form eines Links zwischen den Instanzen und den Typen ist Basis für die Aktualisierung der jeweiligen Instanzen, beispielsweise der Instanzen eines Funktionsbausteines oder eines technologischen Objekts. Nur wenn die Instanzen eine Verbindung zum Typ aus dem sie generiert wurden aufweisen, können sie entsprechend aktualisiert werden.

Die Elemente 2₁..2ₙ in der Bibliothek 3 können aus verschiedenen globalen Bibliotheken oder auch aus Projekten stammen. Die Elemente können ebenso durch einen Benutzer im Rahmen des Systems generiert werden und dann in die Bibliothek eingefügt werden. Die Elemente in der Bibliothek können eine vom Benutzer definierte Struktur aufweisen, wobei sie beispielsweise je nach Herkunft in unterschiedliche Ordner aufgenommen werden. Die Elemente der Bibliothek sind zur Wiederverwendung in unterschiedlichen Domänen eines Automatisierungssystems verwendbar. Beispielsweise weist ein Element Attribute auf, die für die Verwendung im Rahmen einer Controls-Lösung relevant sind und das gleiche Element weist andere Attribute auf, welche für die Verwendung und Weiterverarbeitung im Rahmen, beispielsweise einer MES-Lösung relevant sind. Hierdurch können branchenübergreifend Elemente bei der Erstellung von Automatisierungsprojekten wieder verwendet werden.

FIG 2 zeigt die Aktualisierung der Instanzen eines Elements 2₁, beispielsweise eines Funktionsbausteins, nachdem das Element 2_{1*} modifiziert worden ist. Durch den bidirektionalen Link 5 werden die Instanzen 21I₁, 22I₁ in der Lösung 4 bzw. dem Engineering Programm automatisch aktualisiert 21I_{1*}, 22I_{1*}, wenn der entsprechende Funktionsbaustein in der Bibliothek geändert wird. Die Aktualisierung kann hierbei automatisch oder nach Bedienung durch einen Benutzer, beispielsweise nach Auswahl der zu aktualisierenden Instanzen des Funktionsbausteins erfolgen. Will ein Benutzer nicht alle Instanzen eines Typs aktualisieren, so hat er die Möglichkeit, hier eine Auswahl zu treffen.

FIG 3 zeigt das Ersetzen eines Typen 2₁ in der Bibliothek 3. Wird beispielsweise ein neuer Funktionsbaustein 2₁₁ zusätzlich zum Originalelement 2₁ in die Bibliothek eingefügt, so können die Instanzen 21I₁, 22I₁ welche vom ursprünglichen Funktionsbaustein bzw. ursprünglichen Typ 2₁ aus generiert wurden, durch den neuen Funktionsbaustein 2₁₁ ersetzt werden, es entstehen aktualisierte Instanzen bzw. Exemplare 21I₁₁, 22I₁₁. Hierbei werden ebenfalls die bidirektionalen Verbindungen 5 in Form eines Links zwischen den aktualisierten Instanzen 21I₁₁, 22I₁₁ und dem neuen Funktionsbaustein 2₁₁ wieder generiert. Bei dem Ersetzen eines Typs durch eine neue Version oder einen anderen Typ kann der Benutzer des Systems ebenfalls auswählen, welche Exemplare bzw. Instanzen des Typs aktualisiert werden sollen und welche auf Basis des alten Typs im Projekt verbleiben. Mit dem neuen Funktionsbaustein bzw. dem neuen Typ werden nur die Instanzen, die auch diesem Typ entsprechen sollen bidirektional durch den Link 5 verbunden.

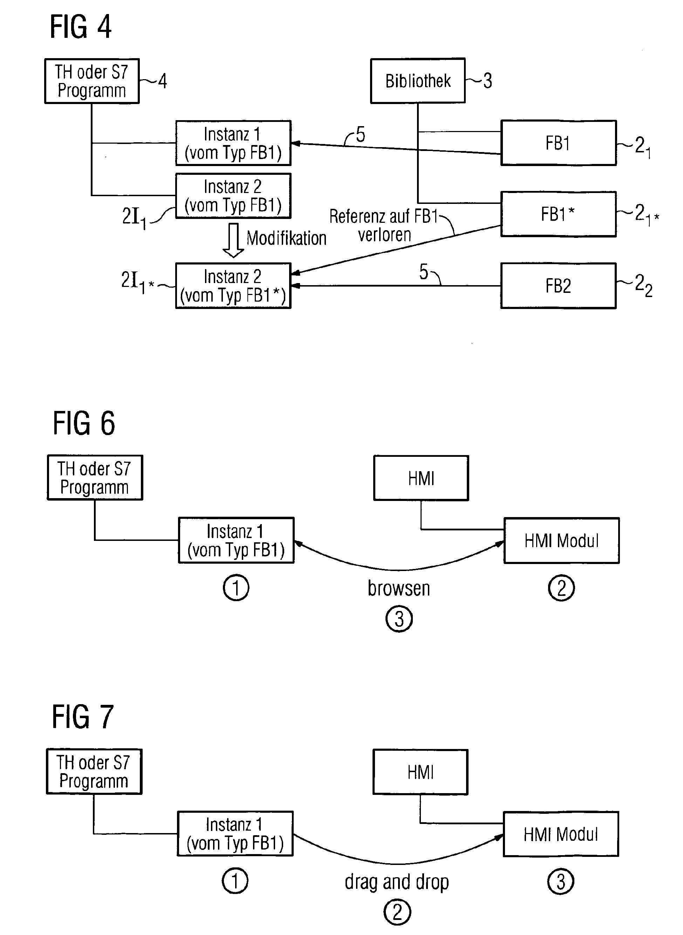

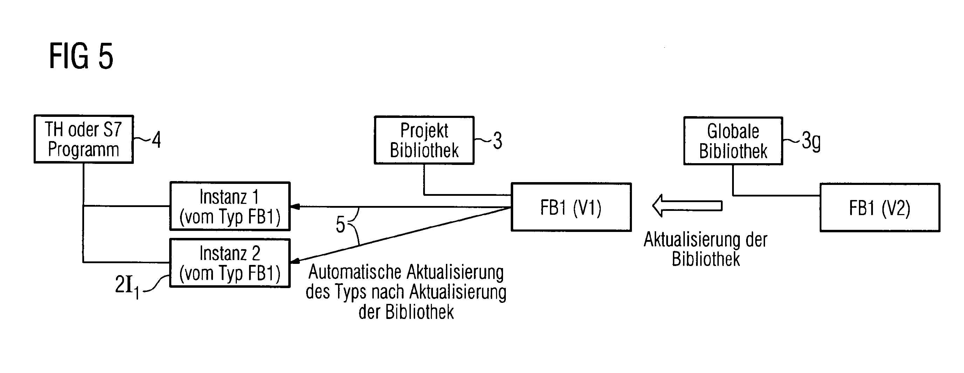

FIG 4 zeigt das Ändern eines Elements 2₁ über die Änderung der Instanz 2I₁ des Elements. Hierbei wird beispielsweise bei einer Instanz, also einem Exemplar eine Änderung 2I_{1*} durchgeführt. Der Benutzer des Systems wird anschließend gefragt, ob der dazugehörige Typ bzw. das Element 2₁ ebenfalls geändert werden soll. Wenn dies der Fall ist, so wird der entsprechende Typ bzw. der Funktionsbaustein 2_{1*} geändert. Soll der Funktionsbaustein 2₁ nicht geändert werden, so wird ein neuer Typ 2₂ kreiert, der dann als Element für die geänderte Instanz zur Verfügung steht. Die geänderte Instanz 2I_{1*} ist anschließend mit dem neuen Typ 2_{1*} bzw. 2₂ bidirektional über den Link 5 verbunden. Die geänderte Instanz verliert ihre Verbindung zum ursprünglichen Typ bzw. zum ursprünglichen Element 2₁. Wird das ursprüngliche Element aktualisiert, so wird entsprechend die geänderte Instanz nicht mehr aktualisiert. Eine Aktualisierung erfolgt nur, wenn der neu kreierte Typ bzw. das Element geändert wird.

FIG 5 zeigt die Aktualisierung der gesamten Bibliothek. Wenn beispielsweise aus einer globalen Bibliothek 3g neue Versionen für die in der Projektbibliothek verwendeten Typen bzw. Elemente, welche als Funktionsbausteine vorliegen, zur Verfügung stehen, so werden in der Projektbibliothek die entsprechenden Elemente geändert. Desgleichen werden die von den Elementen der Projektbibliothek abhängigen Instanzen bzw. Exemplare aktualisiert. Auch hierbei kann die Aktualisierung automatisch oder gesteuert durch einen Benutzer erfolgen.

FIG 6 zeigt die unabhängige Erstellung von Exemplaren aus einem Bibliothekselement. Können aus einem Bibliothekselement mehrere Exemplare separat voneinander instanziiert werden, so erfolgt dies unabhängig voneinander. Beispielsweise kann in einem Controls-Programm ein Funktionsblock eines Elements erstellt werden und parallel dazu kann in einem HMI-System das entsprechende HMI-Modul für den Funktionsblock unabhängig voneinander instanziiert werden. Die Verbindung zwischen den beiden Instanzen wird dadurch hergestellt, dass sie später zugebrowst wird. Hierbei werden nur solche Instanzen miteinander verbunden, die zueinander passen.

FIG 7 zeigt die Instanziierung eines Funktionsblocks aus einem Element, und die darauf folgende Instanziierung eines HMI-Moduls im HMI-Umfeld. Hierbei wird die Instanziierung des HMI-Moduls dadurch generiert, dass der Funktionsblock in das HMI-Umfeld gezogen wird. Durch das Kopieren des Funktionsblocks in das HMI-Umfeld, wird ein entsprechendes HMI-Modul als Exemplar bzw. Instanz des entsprechenden Elements in der Bibliothek generiert. Hierbei wird die Verbindung zwischen dem Funktionsblock als erste existierende Instanz und dem dazugehörigen HMI-Modul automatisch generiert.

## Patentansprüche

1. System (1) zum Verwalten und/oder Bereitstellen von Elementen, insbesondere von technologischen Objekten,
• mit ersten Mitteln zum Kreieren mindestens eines Elements (2₁..2ₙ), insbesondere durch einen Benutzer des Systems, wobei das mindestens eine Element (2₁..2ₙ) als Vorlage zur Erstellung von einem Exemplar als Abbild oder mehreren Exemplaren (2I₁..2Iₙ) als Abbilder des Elements vorgesehen ist,
• mit einer Bibliothek (3) zur Speicherung mindestens der kreierten Elemente und
• mit zweiten Mitteln zur Erstellung mindestens eines Exemplars (2I₁..2Iₙ) eines gespeicherten Elements (2₁..2ₙ), wobei das mindestens eine Exemplar (2I₁..2Iₙ) zur Verwendung für die Erstellung einer Lösung (4), insbesondere einer Automatisierungslösung vorgesehen ist.

2. System nach Anspruch 1, bei dem das mindestens eine Element für einen Benutzer identifizierbare Eigenschaften und/oder Merkmale aufweist.

3. System nach Anspruch 1 oder 2, bei dem die Bibliothek derart ausgebildet ist, dass ihre Struktur durch einen Benutzer vorgebbar ist.

4. System nach einem der Ansprüche 1 bis 3, bei dem die Bibliothek Ordner und/oder Teilmengen zur Speicherung von bestimmten Elementen, insbesondere von Elementen unterschiedlicher Herkunft, aufweist.

5. System nach einem der Ansprüche 1 bis 4, bei dem eine bidirektionale Verbindung zwischen jeweils dem mindestens einen Element und dem einen oder mehreren Exemplaren vorgesehen ist.

6. System nach einem der Ansprüche 1 bis 5, bei dem dritte Mittel zur Aktualisierung der Exemplare eines Elements bei Änderung und/oder Ersatz des Elements vorgesehen sind.

7. System nach Anspruch 6, bei dem die Mittel zur Aktualisierung derart ausgebildet sind, dass die Aktualisierung der Exemplare automatisch bei Änderung und/oder Ersatz eines Elements erfolgt.

8. System nach Anspruch 6, bei dem die Mittel zur Aktualisierung derart ausgebildet sind, dass die Aktualisierung der Exemplare bei Änderung und/oder Ersatz eines Elements durch einen Benutzer ausführbar ist.

9. System nach einem der Ansprüche 1 bis 5, bei dem vierte Mittel zur Aktualisierung von Elementen der Bibliothek bei Änderung eines Exemplars vorgesehen sind.

10. System nach Anspruch 9, bei dem die vierten Mittel zur Aktualisierung der Elemente der Bibliothek derart ausgebildet sind, dass eine Aktualisierung des mindestens einen Elements, das Ursprung eines geänderten Exemplars ist, bei Änderung des Exemplars erfolgt.

11. System nach Anspruch 9, bei dem die vierten Mittel zur Aktualisierung der Elemente der Bibliothek derart ausgebildet sind, dass die Erzeugung eines neuen Elements bei Änderung des Exemplars erfolgt, wobei eine neue bidirektionale Verbindung zwischen dem neuen Element und dem geänderten Exemplar hergestellt wird.

12. System nach einem der Ansprüche 1 bis 11, bei dem fünfte Mittel zur Aktualisierung der Elemente und/oder der Exemplare bei Änderung der Bibliothek vorgesehen sind.

13. System nach einem der Ansprüche 1 bis 12, wobei das System als Engineering-System für Automatisierungssysteme ausgebildet ist.

14. Verfahren zum Verwalten und/oder Bereitstellen von Elementen, insbesondere von technologischen Objekten, bei dem
• mindestens ein Element (2₁..2ₙ) insbesondere durch einen Benutzer des Systems kreiert wird, wobei das mindestens eine Element (2₁..2ₙ) als Vorlage zur Erstellung von einem Exemplar als Abbild oder mehreren Exemplaren (2I₁..2Iₙ) als Abbilder des Elements (2₁..2ₙ) dient,
• mindestens die kreierten Elemente (2₁..2ₙ) in einer Bibliothek (3) gespeichert sind und
• mindestens ein Exemplar (2I₁..2Iₙ) eines gespeicherten Elements (2₁..2ₙ) erstellt wird, wobei das mindestens eine Exemplar (2I₁..2Iₙ) für die Erstellung einer Lösung (4), insbesondere einer Automatisierungslösung, verwendet wird.

15. Verfahren nach Anspruch 14, bei dem das mindestens eine Element durch Eigenschaften und/oder Merkmale von einem Benutzer identifiziert wird.

16. Verfahren nach Anspruch 14 oder 15, bei dem die Struktur der Bibliothek durch einen Benutzer vorgegeben wird.

17. Verfahren nach einem der Ansprüche 14 bis 16, bei dem bestimmte Elemente, insbesondere Elemente unterschiedlicher Herkunft in bestimmten Ordnern und/oder Teilmengen der Bibliothek gespeichert werden.

18. Verfahren nach einem der Ansprüche 14 bis 17, bei dem mindestens ein Element mit einem oder mehreren Exemplaren verbunden ist.

19. Verfahren nach einem der Ansprüche 14 bis 18, bei dem die Exemplare eines Elements bei Änderung und/oder Ersatz des Elements aktualisiert werden.

20. Verfahren nach Anspruch 19, bei dem die Exemplare automatisch bei Änderung und/oder Ersatz eines Elements aktualisiert werden.

21. Verfahren nach Anspruch 19, bei dem die Exemplare bei Änderung und/oder Ersatz eines Elements durch einen Benutzer aktualisiert werden.

22. Verfahren nach einem der Ansprüche 14 bis 18, bei dem Elemente der Bibliothek bei Änderung eines Exemplars aktualisiert werden.

23. Verfahren nach Anspruch 22, bei dem das mindestens eine Element, das Ursprung eines geänderten Exemplars ist, bei Änderung des Exemplars aktualisiert wird.

24. Verfahren nach Anspruch 22, bei dem bei Änderung eines Exemplars ein neues Element erzeugt wird, wobei eine neue bidirektionale Verbindung zwischen dem neuen Element und dem geänderten Exemplar hergestellt wird.

25. Verfahren nach einem der Ansprüche 14 bis 24, bei dem die Elemente und/oder der Exemplare bei Änderung der Bibliothek aktualisiert werden.
